# EUROPÄISCHE PATENTSCHRIFT

(11) **EP 4 430 319 B1**
(45) Veröffentlichungstag und Bekanntmachung des Hinweises auf die Patenterteilung: **27.08.2025**
(21) Anmeldenummer: 22798241.0
(22) Anmeldetag: 23.09.2022
(51) Int. Cl.: F16D 63/00, H02K 41/03, F16D 121/20

(54) **PLANARES TRANSPORTSYSTEM**
FLAT MOVING SYSTEM
SYSTÈME DE DÉPLACEMENT PLAT

(30) Priorität: 09.11.2021 DE 102021129155
(43) Veröffentlichungstag der Anmeldung: 18.09.2024
(73) Patentinhaber: Syntegon Technology GmbH, 71332 Waiblingen (DE)
(72) Erfinder: SCHWARZ, Sebastian, 91616 Neusitz (DE); KLEINERT, Marcus, 74599 Wallhausen (DE)
(74) Vertreter: Novagraaf Group
(86) Internationale Anmeldenummer: PCT/EP2022/076464
(87) Internationale Veröffentlichungsnummer: WO 2023/083518

(56) Entgegenhaltungen:
- CN-A- 108 569 613
- CN-A- 111 817 497
- DE-A1- 102014 225 171

## Beschreibung

Die vorliegende Erfindung betrifft ein planares Transportsystem, mit einer Antriebsfläche und mit mindestens einem Mover, der elektromagnetisch mit der Antriebsfläche koppelbar und in einem Schwebezustand relativ zu der Antriebsfläche bewegbar ist.

Aus der WO 2013/059934 A1 sind planare Transportsysteme bekannt, welche auf einer elektromagnetischen Kopplung zwischen Mover und Antriebsfläche beruhen. Die Mover weisen eine Anordnung von Permanentmagneten auf, deren Magnetfeld mit einem Magnetfeld interagiert, das von elektrischen Spulen der Antriebsfläche erzeugt wird. Durch eine auf die Permanentmagnete abgestimmte spezifische Anordnung der Spulen der Antriebsfläche kann eine freie Bewegung der Mover auf der Antriebsfläche, ggf. auch Rotations- und/oder Kippbewegungen, erreicht werden, wobei die für eine Bewegung der Mover benötigte elektromagnetische Kraft durch eine gesteuerte Bestromung der Spulen der Antriebsfläche erzeugt wird.

In einem unbestromten Zustand der Spulen der Antriebsfläche sind die Mover und die Antriebsfläche nicht miteinander elektromagnetisch gekoppelt, sodass die Mover nicht mehr gesteuert antreibbar, aber relativ zu der Antriebsfläche bewegbar sind.

Dokument DE 10 2014 225171 A1 offenbart ein planares Transportsystem nach dem Stand der Technik.

Hiervon ausgehend liegt der vorliegenden Erfindung die Aufgabe zugrunde, ein planares Transportsystem anzugeben, mit welchem Mover auch in einem unbestromten Zustand der Spulen zuverlässig an der Antriebsfläche fixiert werden können. Diese Aufgabe wird bei einem Transportsystem der eingangs genannten Art dadurch gelöst, dass an einer der Antriebsfläche zugewandten Moverseite mindestens eine Hafteinheit angeordnet ist, welche mit dem Mover verbunden ist und welche mittels mindestens einer Haftfläche den Mover in einem Haltezustand mit der Antriebsfläche verbindet, wobei die mindestens eine Haftfläche eine Nano- und/oder Mikrostrukturierung aufweist. In dem Schwebezustand des Movers weist die Haftfläche der Hafteinheit in Richtung der Antriebsfläche, berührt die Antriebsfläche aber nicht. Um von dem Schwebezustand in den Haltezustand zu wechseln, kann der Mover mit der Hafteinheit an die Antriebsfläche gedrückt werden, sodass der Mover an der Antriebsfläche haftet und nicht mehr relativ zu der Antriebsfläche bewegbar ist. Die für das Andrücken der Mover benötigte Energie kann durch die primäre Energieversorgung der Antriebsfläche und/oder durch die Verwendung einer unabhängigen Energiespeichereinrichtung (unterbrechungsfreie Stromversorgung) bereitgestellt werden.

Durch die Möglichkeit der Herstellung einer mechanischen Haftverbindung zwischen Mover und Antriebsfläche kann eine Einsatzdauer der primären Energieversorgung und/oder einer unabhängigen Energiespeichereinrichtung bei einem Wechsel zwischen Schwebezustand und Haltezustand auf ein Minimum (bspw. auf weniger als 5 Millisekunden) reduziert werden, was bspw. die Nutzung einer Restenergie der primären Energieversorgung ermöglicht. Für den Fall des Einsatzes einer unabhängigen Energiespeichereinrichtung genügt eine kompakte Energiespeichereinrichtung mit geringer Speicherkapazität.

Der Schwebezustand des Movers geht mit einem Abstand zwischen Antriebsfläche und der Haftfläche der mindestens einen Hafteinheit einher, wobei der Abstand (senkrecht zu der Antriebsfläche gemessen) größer 0 mm ist und vorzugsweise maximal 3.5 mm beträgt. Ein Wechsel von dem Schwebezustand in den Haltezustand erfolgt durch entsprechende Steuerung der Bestromung der Spulen der Antriebsfläche. Ausgehend von einem Abstand von bspw. 2 mm im Schwebezustand führt eine Veränderung der Steuerung der Bestromung zu einer Verkleinerung des Abstands, bis bei einem Abstand von genau 0 mm sich die Antriebsfläche und Haftfläche gerade berühren. In diesem Zustand ist Hafteinheit, insbesondere ein Flachkörper, nicht komprimiert; die Moverseite des Movers ist - bedingt durch eine senkrecht zu der Antriebsfläche und der Moverseite anliegende Dicke der Hafteinheit - zu der Antriebsfläche beabstandet. Eine Ansteuerung im Sinne einer Verkleinerung dieses Abstandes zwischen der Moverseite und der Antriebsfläche führt dazu, dass die Hafteinheit, insbesondere der Flachkörper, komprimiert und gegen die Antriebsfläche angepresst wird. Dies ermöglicht eine besonders zuverlässige Fixierung des Movers an der Antriebsfläche. Ein besonders wichtiger Vorteil der Erfindung besteht darin, dass sich die Haftverbindung zwischen Mover und der Antriebsfläche ohne zusätzliche Aktoren herstellen lässt.

Die Haftfläche der mindestens einen Hafteinheit weist eine Nano- und/oder Mikrostrukturierung auf, wodurch eine wiederholbare und weitestgehend rückstandslose Ablösung der Haftfläche von der Antriebsfläche möglich ist. Eine solche Oberflächenstrukturierung ist insbesondere für medienbeständige Materialien (beispielsweise Silikonkautschuk) realisierbar. Somit ist das Transportsystem auch in der Pharmaindustrie und in einer Umgebung mit besonders hohen Hygieneanforderungen gut einsetzbar.

In einer bevorzugten Ausführungsform erstreckt sich die Antriebsfläche in einer Ebene, welche relativ zu einer horizontalen Ebene geneigt oder senkrecht orientiert ist. Hierdurch kann ein besonders platzsparender Aufbau bereitgestellt werden. Bei herkömmlichen Systemen besteht allerdings die Gefahr, dass die Mover im Falle eines Ausfalls der Energieversorgung der Antriebsfläche von der Antriebsfläche abfallen können. Mit der vorliegenden Erfindung ist es nun möglich, auch bei einer bspw. vertikal orientierten Antriebsfläche und in einem unbestromten Zustand der Spulen der Antriebsfläche eine stabile Verbindung zwischen Mover und Antriebsfläche herstellen zu können.

Besonders bevorzugt ist die mindestens eine Hafteinheit als Flachkörper ausgestaltet. Beispielsweise weist die Hafteinheit eine Dicke von maximal 1 mm, insbesondere von maximal 0,7 mm auf. Der Flachkörper beansprucht nur einen kleinen Teilbereich des mit dem Schwebezustand korrespondierenden Abstands zwischen der Antriebsfläche und der Moverseite; gleichzeitig wird die Funktion des planaren Transportsystems nicht beeinträchtigt.

Insbesondere ist es bevorzugt, wenn die flächenmäßige Erstreckung und/oder Anzahl der Hafteinheiten auf die Abmessung und/oder Gewicht des Movers und optional auch eines Transportguts des Movers abgestimmt ist. Beispielsweise sind mindestens 2, vorzugsweise mindestens 3, insbesondere mindestens 4 Hafteinheiten vorgesehen, welche in dem Haltezustand jeweils einen Teil des Gewichts des Movers auf die Antriebsfläche übertragen.

Ferner ist es bevorzugt, wenn die Hafteinheit oder eine Mehrzahl von Hafteinheiten eine kumulierte Haftfläche bilden, welche kleiner ist als die Moverseite, bspw. maximal die Hälfte der Moverseite überdeckt, vorzugsweise maximal 30% der Moverseite, insbesondere maximal 10% der Moverseite.

Eine bevorzugte Ausführungsform sieht vor, dass die Hafteinheiten insbesondere regelmäßig auf einer gedachten Kreisbahn verteilt angeordnet sind, wobei bevorzugt der Mittelpunkt der Kreisbahn dem geometrischen Schwerpunkt der Moverseite entspricht. Beispielsweise sind mindestens 2, vorzugsweise mindestens 3, insbesondere mindestens 4 Hafteinheiten vorgesehen, welche einen Mover in seinem Haltezustand besonders zuverlässig gegen Verdreh- oder Kippmomente stabilisieren, die insbesondere bei einer geneigten oder vertikalen Ausrichtung der Antriebsfläche auf den Mover wirken. Eine Mehrzahl von regelmäßig über die Moverseite verteilt angeordneten Hafteinheiten gewährleistet eine besonders gleichmäßige Aufnahme und Übertragung des Gewichts des Movers auf die Antriebsfläche.

Insbesondere ist es bevorzugt, wenn die Hafteinheiten in einem Randbereich der Moverseite angeordnet sind. Beispielsweise sind die Hafteinheiten in einem Bereich angeordnet, der sich von einer ersten Außenkante der Moverseite ausgehend über maximal 30%, insbesondere über maximal 15%, einer gedachten Verbindungslinie zu einer der ersten Außenkante gegenüberliegenden zweiten Außenkante erstreckt. Hierdurch kann ein Mover in dem Haltezustand besonders zuverlässig gegen ein Verkippen gesichert werden.

Ferner ist es bevorzugt, dass die mindestens eine Hafteinheit wiederholbar lösbar mit der Antriebsfläche verbindbar ist. Durch die wiederholbare Lösbarkeit der Hafteinheiten können "passive" (nicht genutzte) Mover insbesondere temporär an der Antriebsfläche fixiert werden. Für die Dauer des Haltezustands kann eine Bestromung der Spulen entfallen, wodurch der Energiebedarf des Transportsystems verringert wird. Ausgehend von einem Haltezustand erfolgt eine Ablösung des Movers von der Antriebsfläche- insbesondere ohne zusätzliche Aktorik - durch eine gesteuerte Wiederbestromung der Spulen, wodurch der oder die Mover wieder in den Schwebezustand überführt werden.

Ferner ist es bevorzugt, wenn eine Steuerung vorgesehen ist, welche eine Energieversorgung der Antriebsfläche steuert, wobei der Schwebezustand mit einem ersten Versorgungszustand korrespondiert und der Haltezustand mit einem zweiten, von dem ersten Versorgungszustand abweichenden Versorgungszustand.

Insbesondere ist es bevorzugt, dass ein Wechsel zwischen dem Schwebezustand und dem Haltezustand ausschließlich durch einen Wechsel zwischen den beiden Versorgungszuständen bedingt ist.

Besonders bevorzugt ist es, wenn eine Steuereinheit die Energieversorgung der Antriebsfläche steuert, wodurch im Schwebezustand der Abstand zwischen Haftfläche und Antriebsfläche einstellbar ist. Dies erweitert den Bereich der Bewegungsmöglichkeiten der Mover um eine Dimension senkrecht zur Antriebsfläche; des Weiteren lässt sich der Haltezustand ohne zusätzliche Aktorik, also ausschließlich durch eine entsprechende Steuerung der Energieversorgung der Antriebsfläche herstellen.

Es ist ferner bevorzugt, dass eine Steuerung vorgesehen ist, welche die Energieversorgung der Antriebsfläche steuert, wodurch zur Herstellung des Haltezustands die Hafteinheit von dem Mover gegen die Antriebsfläche angedrückt wird. Hierdurch kann eine für eine besonders stabile Fixierung gewünschte Kompression der mindestens einen Hafteinheit auf einfache Weise vom Mover selbst geleistet werden.

Insbesondere ist es bevorzugt, dass die Energieversorgung mindestens für die Dauer des Wechsels zwischen Schwebezustand und Haltezustand durch eine insbesondere ortsfeste Energiespeichereinrichtung bereitgestellt ist. Dies erlaubt den Einsatz der Erfindung als Notfallsystem bei einem unvorhergesehenen Ausfall der Energieversorgung. Da die Fixierung direkt an der Position der Mover zum Zeitpunkt eines Energieausfalls erfolgt, kann die Einsatzdauer der unabhängigen Energiespeichereinrichtung auf ein Minimum reduziert werden, wodurch außerdem eine besonders kompakte Bauweise der Energiespeichereinrichtung mit geringer Speicherkapazität möglich ist.

In einer weiteren Ausführungsform ist es bevorzugt, dass die mindestens eine Hafteinheit mit einer Trägerschicht verbunden ist, wobei die Trägerschicht austauschbar mit dem Mover verbunden oder verbindbar ist. Hierdurch lässt sich eine besonders einfache Möglichkeit des Austauschs der Hafteinheiten bei nachlassender Funktionsfähigkeit oder Funktionsverlust der Hafteinheiten bereitstellen.

Weitere Merkmale und Vorteile der Erfindung sind Gegenstand der nachfolgenden Beschreibung und der zeichnerischen Darstellung des Transportsystems.

In der Zeichnung zeigt
- Fig. 1: eine perspektivische Ansicht einer Ausführungsform eines planaren Transportsystems;
- Fig. 2: eine Seitenansicht des Transportsystems gemäß Fig. 1 mit einem Mover in einem Schwebezustand;
- Fig. 3: einen in Fig. 2 mit III bezeichneten vergrößerten Ausschnitt;
- Fig. 4: eine der Fig. 2 entsprechende Darstellung mit dem Mover in einem Haltezustand; und
- Fig. 5: eine perspektivische Ansicht einer Moverseite des Movers.

Eine Ausführungsform eines planaren Transportsystems ist in der Zeichnung insgesamt mit dem Bezugszeichen 10 bezeichnet.

Das Transportsystem 10 umfasst eine planare Antriebsfläche 12, auf welcher ein Mover 14 bewegbar antreibbar ist.

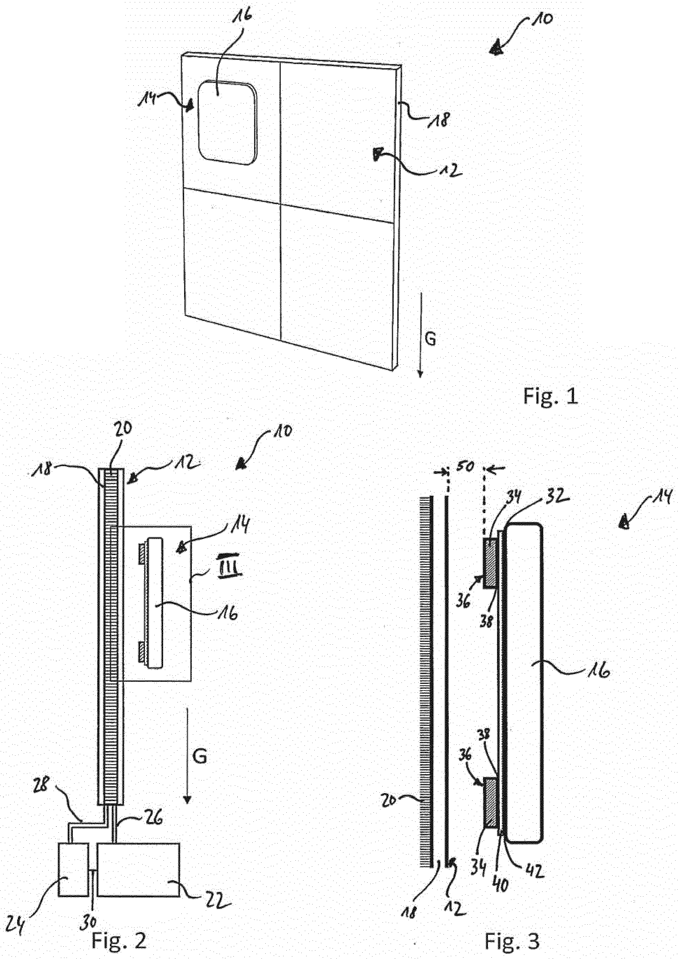

Fig. 1 zeigt beispielhaft eine Antriebsfläche 12, die sich parallel zu der Erdanziehungskraft G und senkrecht zu einer horizontalen Ebene in einer vertikalen Ebene erstreckt. Die Antriebsfläche 12 dient zur Anordnung des Movers 14. Dieser weist einen plattenförmigen Grundkörper 16 auf, der beispielsweise zur Anordnung eines an sich bekannten und hier nicht dargestellten Aktors dient.

Die Antriebsfläche 12 bildet eine Außenfläche eines Antriebstischs 18, in den eine Mehrzahl von Spulen 20 integriert ist, welche durch eine primäre Energieversorgung 22 und/oder durch eine Energiespeichereinrichtung 24 über jeweilige elektrische Leiter 26, 28 bestromt werden können (vgl. Fig. 2).

Vorzugsweise ist die Energiespeichereinrichtung 24 während eines Normalbetriebs des Transportsystems 10 von der primären Energieversorgung 22 aufladbar. Zu diesem Zweck ist eine elektrisch leitende Verbindung 30 zwischen der primären Energieversorgung 22 und der Energiespeichereinrichtung 24 vorgesehen.

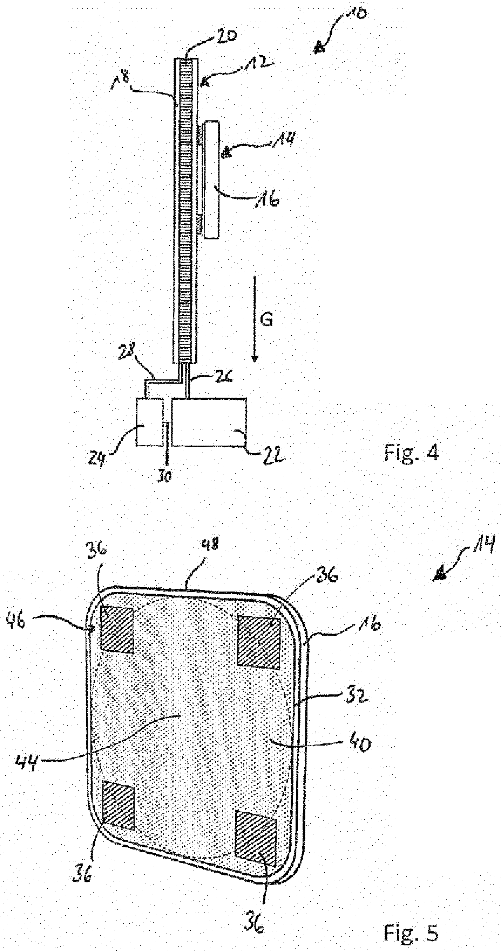

Fig. 3 zeigt den Mover 14 und einen Teil des Antriebstischs 18 in vergrößerter Darstellung. An einer der Antriebsfläche 12 zugewandten Moverseite 32 des Movers 14 ist eine Mehrzahl von Hafteinheiten 34 angeordnet, vergleiche auch Fig. **5****.**

Die Hafteinheiten 34 sind relativ zueinander versetzt angeordnet und weisen jeweilige Haftflächen 36 auf, die in einem Gebrauchszustand des Movers 14 der Antriebsfläche 12 zugewandt sind.

In einer bevorzugten Ausführungsform sind die Hafteinheiten 34 über eine der Antriebsfläche 12 abgewandte Rückseite 38 mit einer Trägerschicht 40 verbunden. Die Trägerschicht 40 ist über eine der Moverseite 32 zugewandte Verbindungsseite 42 mit der Moverseite 32 austauschbar verbunden, bspw. lösbar verklebt.

Es ist auch möglich, dass die Hafteinheiten 34 unter Verzicht auf eine Trägerschicht 40 unmittelbar mit der Moverseite 32 verbunden sind, bspw. lösbar verklebt.

Die Hafteinheiten 34 sind vorzugsweise jeweils als Flachkörper ausgebildet und weiter vorzugsweise regelmäßig auf der Moverseite 32 verteilt angeordnet.

In einer bevorzugten Ausführungsform mit vier Hafteinheiten 34 (vgl. Fig. 5) geht eine Verteilung der Hafteinheiten 34 damit einher, dass diese auf einer gedachten Kreisbahn (in Fig. 5 mit einer gestrichelten Kreislinie verdeutlicht) um jeweils 90° zueinander winkelversetzt angeordnet sind.

Der Mittelpunkt der Kreisbahn entspricht vorzugsweise einem geometrischen Schwerpunkt 44 der Moverseite 32. Vorzugsweise sind die Hafteinheiten 34 relativ zueinander möglichst weit beabstandet.

Es ist bevorzugt, dass die Hafteinheiten 34 zu dem geometrischen Schwerpunkt 44 beabstandet positioniert, insbesondere innerhalb eines Randbereichs 46, der nach außen durch eine Außenkante 48 der Moverseite 32 begrenzt ist.

Ein Schwebezustand des Movers 14 geht damit einher, dass die Haftflächen 36 der Hafteinheiten 34 zu der Antriebsfläche 12 einen Abstand 50 aufweisen, der größer 0 mm ist, bspw. zwischen 1 mm und 3.5 mm beträgt, vgl. auch Fig. 2 und Fig. 3. Die Größe des Abstands 50 kann durch eine gesteuerte Bestromung der Spulen 20 eingestellt werden.

Wird ausgehend von einem Schwebezustand die Größe des Abstands 50 verkleinert, bspw. ein Abstand 50 von gleich oder kleiner 0 mm eingestellt, wechselt der Mover 14 von dem Schwebezustand in einen Haltezustand (vgl. Fig. 4). Der Haltezustand zeichnet sich durch einen direkten Haftkontakt zwischen der Antriebsfläche 12 und den Haftflächen 36 der Hafteinheiten 34 aus. Vorzugsweise wird ein Abstand 50 kleiner 0 mm gewählt, um die Hafteinheiten 34 durch den Mover 14 an die Antriebsfläche 12 anzupressen, was die Ausbildung einer zuverlässigen Haftverbindung zwischen der Antriebsfläche 12 und den Hafteinheiten 34 unterstützt. In dem Haltezustand ist der Mover 14 stoffschlüssig an der Antriebsfläche 12 fixiert, sodass ein Wegfall einer Bestromung der Spulen 20 nicht dazu führt, dass der Mover 14 von der Antriebsfläche 12 abfällt. Insbesondere ist der Mover 14 mittels der Hafteinheiten 34 an jeder beliebigen Position der Antriebsfläche 12 fixierbar.

## Patentansprüche

1. Planares Transportsystem (10), mit einer Antriebsfläche (12) und mit mindestens einem Mover (14), der elektromagnetisch mit der Antriebsfläche (12) koppelbar und in einem Schwebezustand relativ zu der Antriebsfläche (12) bewegbar ist, **dadurch gekennzeichnet, dass** an einer der Antriebsfläche (12) zugewandten Moverseite (32) mindestens eine Hafteinheit (34) angeordnet ist, welche mit dem Mover (14) verbunden ist und welche mittels mindestens einer Haftfläche (36) den Mover (14) in einem Haltezustand mit der Antriebsfläche (12) verbindet, wobei die mindestens eine Haftfläche (36) eine Nano- und/oder Mikrostrukturierung aufweist.

2. Planares Transportsystem (10) nach Anspruch 1, **dadurch gekennzeichnet, dass** sich die Antriebsfläche (12) in einer Ebene erstreckt, welche relativ zu einer horizontalen Ebene geneigt oder senkrecht orientiert ist.

3. Planares Transportsystem (10) nach einem der vorangegangenen Ansprüche, **dadurch gekennzeichnet, dass** die mindestens eine Hafteinheit (34) ein Flachkörper ist.

4. Planares Transportsystem (10) nach einem der vorangegangenen Ansprüche, **dadurch gekennzeichnet, dass** eine flächenmäßige Erstreckung und/oder eine Anzahl der Hafteinheiten (34) auf ein Gewicht und/oder Abmessungen des Movers (14) abgestimmt sind.

5. Planares Transportsystem (10) nach Anspruch 4, **dadurch gekennzeichnet, dass** die Hafteinheiten (34) insbesondere regelmäßig auf einer gedachten Kreisbahn verteilt angeordnet sind, wobei vorzugsweise der Mittelpunkt der Kreisbahn dem geometrischen Schwerpunkt (44) der Moverseite (32) entspricht.

6. Planares Transportsystem (10) nach einem der vorangegangenen Ansprüche, **dadurch gekennzeichnet, dass** die mindestens eine Hafteinheit (34) in einem Randbereich (46) der Moverseite (32) angeordnet ist.

7. Planares Transportsystem (10) nach einem der vorangegangenen Ansprüche, **dadurch gekennzeichnet, dass** die mindestens eine Hafteinheit (34) wiederholbar lösbar mit der Antriebsfläche (12) verbindbar ist.

8. Planares Transportsystem (10) nach einem der vorangegangenen Ansprüche, **dadurch gekennzeichnet, dass** eine Steuerung vorgesehen ist, welche eine Energieversorgung der Antriebsfläche (12) steuert, wobei der Schwebezustand mit einem ersten Versorgungszustand korrespondiert und der Haltezustand mit einem zweiten, von dem ersten Versorgungszustand abweichenden Versorgungszustand.

9. Planares Transportsystem (10) nach Anspruch 8, **dadurch gekennzeichnet, dass** ein Wechsel zwischen dem Schwebezustand und dem Haltezustand ausschließlich durch einen Wechsel zwischen den beiden Versorgungszuständen bedingt ist.

10. Planares Transportsystem (10) nach einem der vorangegangenen Ansprüche, **dadurch gekennzeichnet, dass** eine Steuerung vorgesehen ist, welche die Energieversorgung der Antriebsfläche (12) steuert, wodurch im Schwebezustand der Abstand (50) zwischen Haftfläche (36) und Antriebsfläche (12) einstellbar ist.

11. Planares Transportsystem (10) nach Anspruch 10, **dadurch gekennzeichnet, dass** eine Steuerung vorgesehen ist, welche die Energieversorgung der Antriebsfläche (12) steuert, wodurch zur Herstellung des Haltezustands die Hafteinheit (34) von dem Mover (14) gegen die Antriebsfläche (12) angedrückt wird.

12. Planares Transportsystem (10) nach einem der vorangegangenen Ansprüche, **dadurch gekennzeichnet, dass** die Energieversorgung mindestens für die Dauer des Wechsels zwischen Schwebezustand und Haltezustand durch eine insbesondere ortsfeste Energiespeichereinrichtung (24) bereitgestellt ist.

13. Planares Transportsystem (10) nach einem der vorangegangenen Ansprüche, **dadurch gekennzeichnet, dass** die mindestens eine Hafteinheit (34) mit einer Trägerschicht (40) verbunden ist, wobei die Trägerschicht (40) austauschbar mit dem Mover (14) verbunden oder verbindbar ist.

## Claims

1. Planar transport system (10), comprising a drive surface (12) and comprising at least one mover (14) which can be electromagnetically coupled to the drive surface (12) and is movable in a floating state relative to the drive surface (12), **characterized in that** at least one adhesive unit (34) is arranged on a mover side (32) facing the drive surface (12), which unit is connected to the mover (14) and connects the mover (14) in a holding state to the drive surface (12) by means of at least one adhesive surface (36), the at least one adhesive surface (36) having a nano- and/or microstructuring.

2. Planar transport system (10) according to claim 1, **characterized in that** the drive surface (12) extends in a plane which is inclined or vertically oriented relative to a horizontal plane.

3. Planar transport system (10) according to either of the preceding claims, **characterized in that** the at least one adhesive unit (34) is a flat body.

4. Planar transport system (10) according to any of the preceding claims, **characterized in that** a surface area extension and/or a number of the adhesive units (34) are matched to a weight and/or dimensions of the mover (14).

5. Planar transport system (10) according to claim 4, **characterized in that** the adhesive units (34) are arranged in particular regularly distributed on an imaginary circular path, the center of the circular path preferably corresponding to the geometric center of gravity (44) of the mover side (32).

6. Planar transport system (10) according to any of the preceding claims, **characterized in that** the at least one adhesive unit (34) is arranged in an edge region (46) of the mover side (32).

7. Planar transport system (10) according to any of the preceding claims, **characterized in that** the at least one adhesive unit (34) is repeatedly detachably connectable to the drive surface (12).

8. Planar transport system (10) according to any of the preceding claims, **characterized in that** a controller is provided which controls an energy supply to the drive surface (12), the floating state corresponding to a first supply state and the holding state corresponding to a second supply state which differs from the first supply state.

9. Planar transport system (10) according to claim 8, **characterized in that** a change between the floating state and the holding state is caused exclusively by a change between the two supply states.

10. Planar transport system (10) according to any of the preceding claims, **characterized in that** a controller is provided which controls the energy supply to the drive surface (12), whereby the distance (50) between the adhesive surface (36) and the drive surface (12) can be adjusted in the floating state.

11. Planar transport system (10) according to claim 10, **characterized in that** a controller is provided which controls the energy supply to the drive surface (12), whereby the adhesive unit (34) is pressed against the drive surface (12) by the mover (14) to establish the holding state.

12. Planar transport system (10) according to any of the preceding claims, **characterized in that** the energy supply is provided at least for the duration of the change between the floating state and the holding state by an in particular stationary energy storage device (24).

13. Planar transport system (10) according to any of the preceding claims, **characterized in that** the at least one adhesive unit (34) is connected to a carrier layer (40), the carrier layer (40) being connected or connectable interchangeably to the mover (14).

## Revendications

1. Système de transport planaire (10), comportant une surface d'entraînement (12) et comportant au moins un convoyeur (14), qui peut être couplé électromagnétiquement à la surface d'entraînement (12) et qui peut être déplacé dans un état flottant par rapport à la surface d'entraînement (12),
**caractérisé en ce qu'**au moins une unité d'adhérence (34) est disposée sur un côté de convoyeur (32) tourné vers la surface d'entraînement (12), unité qui est reliée au convoyeur (14) et qui, à l'aide d'au moins une surface d'adhérence (36), relie le convoyeur (14) à la surface d'entraînement (12) dans un état de maintien, dans lequel l'au moins une surface d'adhérence (36) présente une nano- et/ou microstructuration.

2. Système de transport planaire (10) selon la revendication 1,
**caractérisé en ce que** la surface d'entraînement (12) s'étend dans un plan qui est incliné ou orienté perpendiculairement par rapport à un plan horizontal.

3. Système de transport planaire (10) selon l'une des revendications précédentes, **caractérisé en ce que** l'au moins une unité d'adhérence (34) est un corps plat.

4. Système de transport planaire (10) selon l'une des revendications précédentes, **caractérisé en ce qu'**une extension en surface et/ou un nombre d'unités d'adhérence (34) sont adaptés à un poids et/ou à des dimensions du convoyeur (14).

5. Système de transport planaire (10) selon la revendication 4,
**caractérisé en ce que** les unités d'adhérence (34) sont en particulier disposées réparties régulièrement sur une trajectoire circulaire imaginaire, dans lequel le centre de la trajectoire circulaire correspond de préférence au centre de gravité géométrique (44) du côté de convoyeur (32).

6. Système de transport planaire (10) selon l'une des revendications précédentes, **caractérisé en ce que** l'au moins une unité d'adhérence (34) est disposée dans une zone de bordure (46) du côté de convoyeur (32).

7. Système de transport planaire (10) selon l'une des revendications précédentes, **caractérisé en ce que** l'au moins une unité d'adhérence (34) peut être reliée de manière répétable et amovible à la surface d'entraînement (12).

8. Système de transport planaire (10) selon l'une des revendications précédentes, **caractérisé en ce qu'**il est prévu une commande qui commande une alimentation en énergie de la surface d'entraînement (12), dans lequel l'état flottant correspond à un premier état d'alimentation et l'état de maintien correspond à un second état d'alimentation différent du premier état d'alimentation.

9. Système de transport planaire (10) selon la revendication 8,
**caractérisé en ce qu'**un changement entre l'état flottant et l'état de maintien est exclusivement conditionné par un changement entre les deux états d'alimentation.

10. Système de transport planaire (10) selon l'une des revendications précédentes, **caractérisé en ce qu'**il est prévu une commande qui commande l'alimentation en énergie de la surface d'entraînement (12), moyennant quoi la distance (50) entre la surface d'adhérence (36) et la surface d'entraînement (12) peut être réglée à l'état flottant.

11. Système de transport planaire (10) selon la revendication 10,
**caractérisé en ce qu'**il est prévu une commande qui commande l'alimentation en énergie de la surface d'entraînement (12), moyennant quoi l'unité d'adhérence (34) est pressée contre la surface d'entraînement (12) par le convoyeur (14) pour l'établissement de l'état de maintien.

12. Système de transport planaire (10) selon l'une des revendications précédentes, **caractérisé en ce que** l'alimentation en énergie est fournie, au moins pour la durée du changement entre l'état flottant et l'état de maintien, par un dispositif de stockage d'énergie (24), en particulier fixe.

13. Système de transport planaire (10) selon l'une des revendications précédentes, **caractérisé en ce que** l'au moins une unité d'adhérence (34) est reliée à une couche de support (40), dans lequel la couche de support (40) est reliée ou peut être reliée de manière interchangeable au convoyeur (14).
